# EUROPEAN PATENT SPECIFICATION

(11) **EP 3 080 003 B1**
(45) Date of publication and mention of the grant of the patent: **09.01.2019**
(21) Application number: 14869017.5
(22) Date of filing: 05.12.2014
(51) Int. Cl.: B29C 51/08, B65D 41/04, D21J 3/06, C08J 5/04, B29D 99/00, C08J 5/24, B29C 43/02, B29C 43/42, B29K 1/00, B29L 31/56

(54) **METHOD FOR MANUFACTURING A SCREW CAP**
VERFAHREN ZUR HERSTELLUNG EINER SCHRAUBKAPPE
PROCÉDÉ DE FABRICATION D'UN CAPUCHON À VISSER

(30) Priority: 10.12.2013 SE 1351478
(43) Date of publication of application: 19.10.2016
(73) Proprietor: Stora Enso Oyj, 00101 Helsinki (FI)
(72) Inventor: AXRUP, Lars, S-66341 Hammarö (SE)
(74) Representative: Steinrud, Henrik
(86) International application number: PCT/IB2014/066640
(87) International publication number: WO 2015/087221

(56) References cited:
- GB-A- 607 700
- JP-A- 2004 143 438
- JP-A- 2011 148 214
- US-A- 3 743 128
- US-A- 4 844 270
- US-A1- 2010 207 300
- PAUL KROCHAK ET AL: "Drag reduction characteristics of micro-fibrillated cellulose suspensions", PAPERCON2011, 13 May 2011 (2011-05-13), pages 1-27, XP055401015,
- NAKAGAITO A. ET AL.: 'Production of microfibrillated cellulose (MFC)-reinforced polylactic acid (PLA) nanocomposites from sheets obtained by a papermaking-like process' COMPOSITES SCIENCE AND TECHNOLOGY vol. 69, 2009, pages 1293 - 1297, XP026021849
- KAROLINA LARSSON ET AL.: 'Polylactide Latex/Nanofibrillated Cellulose Bionanocomposites of High Nanofibrillated Cellulose Content and Nanopaper Network Structure Prepared by a Papermaking Route' JOURNAL OF APPLIED POLYMER SCIENCE vol. 125, 2012, pages 2460 - 2466, XP055174705
- CHRISTOPHER J.G. PLUMMER ET AL.: 'Morphological investigation of polylactide/microfibrillated cellulose composites' COLLOID. POLYM. SCI. vol. 291, 2013, pages 2203 - 2211, XP035320636
- TAO WANG ET AL.: 'Cellulose-Nanofiber-Reinforces POly(lactic acid) Composites Prepared by a Water-Based Approach' APPLIED MATERIALS AND INTERFACES vol. 4, 2012, pages 5079 - 5085, XP055348845

## Description

The present invention relates to a method for manufacturing a screw cap, which comprises a blind hole with inner threads.

Cardboard packages for liquid or semi-liquid food stuff such as milk, water, juice, yoghurt etc. are well known. A major benefit with these cardboard packages is that the packages are biodegradable to much more extent than plastic packages. Recent years it has been more common, that the cardboard packages are equipped with an opening comprising a screw cap, wherein the opening is made of a plastic such as polyethylene. The major benefit with the screw cap is that the opening can be resealed, which is in favour for keeping the food stuff fresh. A drawback with polyethylene screw caps is that the amount of plastics in the package in increased. Such polyethylene screw caps are normally manufactured by injection moulding.

PAUL KROCHAK ET AL: "Drag reduction characteristics of microfibrillated cellulose suspensions", PAPERCON 2011 discloses a micro-fibrillated cellulose used as bio nanocomposite in a screw cap.

GB 607 700 A discloses a paper blank material, to form a paper screw cap. The method uses a first and a second tool to form the screw cap by moving the first tool into the second tool.

In the following description of the invention the term microfibrillated cellulose (MFC) will be used. MFC is also known as nanocellulose. It is a material typically made from wood cellulose fibres, both from hardwood or softwood fibres. It can also be made from microbial sources, agricultural fibres such as wheat straw pulp, bamboo or other non-wood fibre sources. In microfibrillated cellulose the individual microfibrils have been partly or totally detached from each other. A microfibrillated cellulose nanofiber is normally very thin (∼20 nm) and the length is often between 100 nm to 10 µm. However, the microfibrils may also be longer, for example between 10-200 µm, but lengths even 2000 µm can be found due to wide length distribution. Fibres that has been fibrillated and which have microfibrils on the surface and microfibrils that are separated and located in a water phase of slurry are included in the definition MFC. Furthermore, whiskers are also included in the definition MFC.

It is an object of the present invention, to provide a method of manufacturing a screw cap which eliminates or alleviates at least some of the above mentioned disadvantages of the prior art with plastic screw caps.

The method according to the invention is defined in independent claim 1. Preferred embodiments thereof are defined in the dependent claims. The method according to the invention comprises the steps of:
a) placing a piece of pre-preg MFC, i.e. pre-preg microfibrillated cellulose, with a dryness of 40-90%, of a suitable size for forming the screw cap, between a first tool comprising a protruded part with outer threads for forming the inner threads of the blind hole, and
   a second tool comprising a section with an inner lateral surface for forming an outer lateral surface of the screw cap,
b) moving the protruded part of the first tool into the section of the second tool, such that the first and the second tool forms the screw cap,
c) heating the first and the second tool to a temperature between 50-200°C, preferably 100-170°C, such that the piece of pre-preg MFC dries and shrinks onto the first tool and thereby forms the screw cap, and
d) unscrewing the formed screw cap from the threads of the protruded part of the first tool.

In the following, the invention will be described further with reference to the drawings, wherein:
Figure 1 shows a first tool and a second tool for manufacturing a screw cap of MFC, wherein the first and the second tool is in a first position.
Figure 2 shows the first tool and the second tool in a second position.
Figure 3 shows a screw cap manufactured by the inventive method.

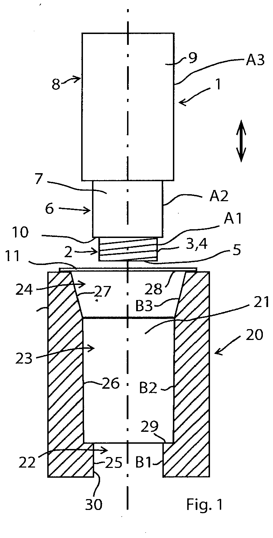

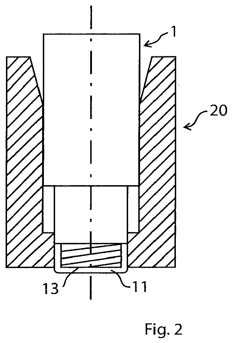

Figure 1 and 2 shows a preferred embodiment of an arrangement for manufacturing a substantially cylinder-shaped screw cap 12 of a piece of pre-preg MFC 11. I.e. a piece of MFC which has been pre-impregnated or mixed, with a compatibilizer (optional), and a ground polymer or a polymer Latex such as PLA Latex. The piece of pre-preg MFC 11 has a dryness between 40-90%, preferably 60-80%. The piece of pre-preg MFC 11 has preferably at least one barrier film. The barrier film is either arranged on one side or on each sides of the piece of pre-preg MFC 11.

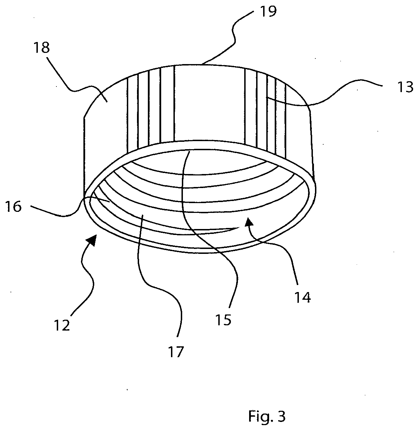

The arrangement comprising a first tool 1 and a second tool 20, which tools 1, 20 are linear movable in respect to each other, such that, the first tool 1 can be moved into the second tool 20. The screw cap 12 to be manufactured, see fig. 3, comprises a circular blind hole 14, which is limited by a circular bottom surface 15 and a cylindrical, inner lateral surface 16, which inner lateral surface 16 is provided with threads 17 for screwing the screw cap 12 onto a package (not shown). The screw cap 12 further comprises a cylindrical, outer lateral surface 18 which faces away from the inner lateral surface 16 and a circular, top surface 19 which faces away from the bottom surface 15. The outer lateral surface 18 having a suitable grip pattern 13, such as grooves 13 in the axial direction of the screw cap 12 for facilitate a user to screw and/or unscrew the screw cap from a package.

The first tool 1 comprising a lower, cylindrical, first part 2; a middle, cylindrical, second part 6 and an upper, cylindrical, third part 8.

The first part 2, of the first tool 1, having a first diameter A1 and comprises a cylindrical, first lateral surface 3 for forming the inner lateral surface 16 of the screw cap 12. The first part 2 further comprises a circular end surface 5 for forming the bottom surface 15 of the screw cap 12, which end surface 5 facing downwards. The first lateral surface 3 having outer threads 4 for forming the inner threads 17 of the inner lateral surface 16 of the screw cap 12.

The second part 6, of the first tool 1, is arranged axially with, and located above, the first part 2. The second part 6 having a second diameter A2 and comprises a cylindrical, second lateral surface 7 of the first tool 1 for cutting the piece of pre-preg MFC to a desirable size, which is explained more in detail below.

The third part 8, of the first tool 1, is arranged axially with both the first part 2 and second part 6. The third part 8 is located on top of the second part 6. Hence, the second part 6 is located between the first part 6 and the third part 8. The third part 8 having a third diameter A3 and comprises a third lateral surface 9 for steering the first tool 1 into the second tool 20. The third diameter A3 is greater than the second diameter A2 and the second diameter A2 is greater than the first diameter A1. The transition between the first part 2 and the second part 6 forms a first cutting edge 10 of the device at the first tool 1. In use the first part's 2 outer lateral surface 3, with threads 4, forms the inner surface 16 and the threads 17 of the screw cap 12. The end surface 6 of the first tool 1 forms the bottom surface 15 of the screw cap 12.

The second tool 20 comprises an opening 28 of a blind hole 21, which blind hole comprises a lower, cylindrical, first section 22; a middle, cylindrical, second section 23 and an upper, conical, third section 24.

The first section 22 is formed by a cylindrical, circumferential, first inner lateral surface 25 for forming the outer lateral surface 18 of the screw cap 12. The first inner lateral surface 25 having protrusions 30 for forming the grooves 13 on the outer lateral surface 18 of the screw cap 12. The first section 22 having a first inner diameter B1.

The second section 23 is formed by a cylindrical, second inner lateral surface 26 for steering the first tool 1 through the second tool 20. The second section 23 having a second inner diameter B2.

The third section 24 is formed by a conical, third inner lateral surface 27 for folding the outer ends of the piece of pre-preg MFC 11 upwards. The third section 24 having a third inner diameter B3. The third diameter B3 increases continuously upwards towards the opening 28 of the blind hole 21. The third diameter B3 is equal to the second diameter-B2 in the transition between the third section 24 and the second section 23. The second diameter B2 is greater than the first diameter B1, such that, the transition.between the first section 22 and the second part 6 forms a second cutting edge 29 of the device at the second tool 20.

For producing a screw cap 12 the method comprising the steps of placing the first tool 1 and the second tool 20 in a first position, which is shown in fig. 1. In the first position, the first tool 1 is positioned at a predetermined distance away from second tool 20, wherein the end surface 5 of the first tool 1 facing against the opening of the second tool 20.

A piece of pre-preg MFC 11 of a suitable size for forming the screw cap 12 is placed over the opening 28.

The first tool 1 is then axially moved against the upper side of the piece of pre-preg MFC 11 and into the opening 28 of the second tool 20.

Hence, the piece of pre-preg MFC 11 is pushed by the end surface 5 of the first tool 1 and into the third section 24 of the blind hole 21.

The conical, third inner lateral surface 27 brings the outer parts of the piece of pre-preg MFC 11 to be folded upwards and behind that part of the piece of pre-preg MFC 11 that is in contact with the end surface 5.

The piece of pre-preg MFC 11 is continuously pushed by the end surface 5, through the second section 23 of the blind hole 21, towards the first section 22 of the second tool 20.

When the end surface 5 has reached the first section, the outer portions of the piece of pre-preg MFC is folded upwards by the first inner lateral surface 25, such that, the cylindrical walls of the screw cap 12 is formed.

When the first cutting edge 10 at the first tool reaches the second cutting edge 29 at the second tool, the outer parts of the piece of pre-preg MFC 11 are cut off between the two cutting edges 10, 29.

The first and second tool 1, 20 have now finally reached the second position, which is shown in figure 2.

The piece of pre-preg MFC 11 is drying by the first 1 and second tools 20, which tools 1, 20 have been heated to a suitable temperature for drying pre-preg MFC. A suitable temperature of the tools is typically 50-200°C, preferably 100-170°C. The drying brings the piece of pre-preg MFC to shrink, such that, the screw cap 12 is formed by the surrounding tools 1, 20. The threads 4 of the first part 2 forms the inner threads 17 of the screw cap 12 and the protrusions 30 of the first inner lateral surface 25 forms the grip pattern 13 of the outer lateral surface 18 of the screw cap 12.

After completed drying, the screw cap 12 is unscrewed from the threads 4 of the first part 2.

In the foregoing, the invention has been described on the basis of a specific preferred embodiment. It is appreciated, however, that other embodiments and variants are possible within the scope of the following claims. For instance instead of moving the first tool, it is obvious that it also would be possible to move the second tool upwards, or even both tools simultaneously. Moreover, the second tool could be in the form of rotating rollers, wherein the circumferential surface of the rollers forms an inner lateral surface for forming the outer lateral surface 18 of the screw cap and wherein the pre-preg MFC is fed against the first tool by the rotating rollers. It is also possible to manufacture a screw cap with other grip pattern than grooves or even a screw cap without a grip pattern. Moreover, the inner lateral surface of the first section, for forming the outer lateral surface of the screw cap, does not necessarily need to be cylindrical.

## Claims

1. Method for manufacturing a screw cap (12), which comprises a blind hole (14) with inner threads (17), the method comprising the steps of:
a) placing a piece of pre-preg MFC (11), i.e. pre-preg microfibrillated cellulose, with a dryness of 40-90%, of a suitable size for forming the screw cap, between a first tool (1) comprising a protruded part (2) with outer threads (4) for forming the inner threads (17) of the blind hole (14), and
a second tool comprising a section (22) with an inner lateral surface (25) for forming an outer lateral surface (18) of the screw cap,
b) moving the protruded part of the first tool into the section (22) of the second tool, such that the first and the second tool forms the screw cap,
c) heating the first and the second tool to a temperature between 50-200°C, preferably 100-170°C, such that the piece of pre-preg MFC (11) dries and shrinks onto the first tool and thereby forms the screw cap (12), and
d) unscrewing the formed screw cap (12) from the threads (14) of the protruded part of the first tool.

2. Method according to claim 1, **characterized in that** the piece of pre-preg MFC has a dryness of 60-80%.

3. Method according to any of claims 1-2, **characterized in that** the method further comprising the step of cutting off the outer parts of the piece of pre-preg MFC (11) to a size suitable to form the screw cap (12).

4. Method according to any of claims 1-3, **characterized in that** the pre-preg MFC is MFC mixed with PLA Latex.

5. Method according to any of claims 1-4, **characterized in that** the piece of pre-preg MFC having at least one barrier film.

6. The method according to claim 5, **characterized in that** the barrier film is a polyethylene film.

## Patentansprüche

1. Verfahren zur Herstellung einer Schraubkappe (12), welche ein Sackloch (14) mit Innengewinde (17) umfasst, das Verfahren umfassend die Schritte:
a) Platzieren eines Stücks vorimprägnierter MFC (11), d. h. vorimprägnierte mikrofibrillierte Cellulose, mit einer Trockenheit von 40 bis 90 %, mit einer zum Bilden der Schraubkappe geeigneten Größe zwischen einem ersten Werkzeug (1), das einen hervorstehenden Teil (2) mit Außengewinde (4) zum Bilden des Innengewindes (17) des Sacklochs (14) umfasst, und
einem zweiten Werkzeug, das einen Abschnitt (22) mit einer inneren Seitenfläche (25) zum Bilden einer äußeren Seitenfläche (18) der Schraubkappe umfasst,
b) Bewegen des hervorstehenden Teils des ersten Werkzeugs in den Abschnitt (22) des zweiten Werkzeugs hinein, sodass das erste und das zweite Werkzeug die Schraubenkappe bilden,
c) Erwärmen des ersten und des zweiten Werkzeugs auf eine Temperatur zwischen 50 und 200 °C, vorzugsweise 100-170 °C, sodass das Stück vorimprägnierte MFC (11) trocknet und auf das erste Werkzeug aufschrumpft und dadurch die Schraubkappe (12) bildet, und
d) Herausschrauben der gebildeten Schraubkappe (12) aus dem Gewinde (14) des hervorstehenden Teils des ersten Werkzeugs.

2. Verfahren nach Anspruch 1, **dadurch gekennzeichnet, dass** das Stück vorimprägnierte MFC eine Trockenheit von 60-80 % aufweist.

3. Verfahren nach einem der Ansprüche 1-2, **dadurch gekennzeichnet, dass das** Verfahren ferner den Schritt des Schneidens der äußeren Teile des Stücks vorimprägnierter MFC (11) auf eine geeignete Größe, um die Schraubkappe (12) zu bilden, umfasst.

4. Verfahren nach einem der Ansprüche 1-3, **dadurch gekennzeichnet, dass** es sich bei der vorimprägnierten MFC um mit PLA-Latex vermischte MFC handelt.

5. Verfahren nach einem der Ansprüche 1-4, **dadurch gekennzeichnet, dass** das Stück vorimprägnierte MFC mindestens einen Barrierefilm aufweist.

6. Verfahren nach Anspruch 5, **dadurch gekennzeichnet, dass** es sich bei dem Barrierefilm um einen Polyethylenfilm handelt.

## Revendications

1. Procédé de fabrication d'un bouchon à vis (12), qui comprend un trou aveugle (14) avec filetage intérieur (17), le procédé comprenant les étapes consistant à :
a) placer un morceau de CMF pré-imprégnée (11), c'est-à-dire de cellulose microfibrillée pré-imprégnée, dont la dessiccation est comprise entre 40 et 90 %, et ayant une taille appropriée pour former le bouchon à vis, entre un premier outil (1) comprenant une partie en saillie (2) avec des filetages extérieurs (4) pour former les filetages intérieurs (17) du trou aveugle (14), et un deuxième outil comprenant une section (22) ayant une surface latérale intérieure (25) pour former une surface latérale extérieure (18) du bouchon à vis,
b) déplacer la partie en saillie du premier outil dans la section (22) du deuxième outil, de telle sorte que le premier et le deuxième outil forment le bouchon à vis,
c) chauffer le premier et le deuxième outil à une température comprise entre 50 et 200 °C, de préférence entre 100 et 170 °C, de sorte que la pièce de CMF pré-imprégnée (11) sèche et se contracte sur le premier outil pour ainsi former le bouchon à vis (12), et
d) dévisser le bouchon à vis (12) du filetage (14) de la partie en saillie du premier outil.

2. Procédé selon la revendication 1, **caractérisé en ce que** le morceau de CMF pré-imprégnée a une dessiccation comprise entre 60 et 80%.

3. Procédé selon l'une quelconque des revendications 1-2, **caractérisé en ce que** le procédé comprend en outre l'étape consistant à découper les parties extérieures du morceau de CMF pré-imprégnée (11) à une taille appropriée, pour former le bouchon à vis (12).

4. Procédé selon l'une quelconque des revendications 1-3, **caractérisé en ce que** la CMF pré-imprégnée est un mélange de CMF pré-imprégnée et de PLA Latex (Polystyrène-Latex).

5. Procédé selon l'une quelconque des revendications 1-4, **caractérisé en ce que** le morceau de CMF pré-imprégnée comprend au moins un film barrière.

6. Procédé selon la revendication 5, **caractérisé en ce que** le film barrière est un film polyéthylène.
